# EUROPEAN PATENT SPECIFICATION

(11) **EP 0 856 134 B1**
(45) Date of publication and mention of the grant of the patent: **23.01.2002**
(21) Application number: 96934836.6
(22) Date of filing: 16.10.1996
(51) Int. Cl.: F24D 11/02, F25B 15/06, F24F 3/06

(54) **A METHOD AND ARRANGEMENT FOR THE PRODUCTION OF COOLING POWER**
VERFAHREN UND VORRICHTUNG ZUM ERZEUGEN VON KÄLTE
PROCEDE ET DISPOSITIF DE PRODUCTION D'ENERGIE DE REFROIDISSEMENT

(30) Priority: 17.10.1995 FI 954952
(43) Date of publication of application: 05.08.1998
(73) Proprietor: ABB INSTALLAATIOT OY, 21530 Paimio (FI)
(72) Inventor: LESKINEN, Seppo, FIN-01120 Västerskog (FI)
(74) Representative: Valkeiskangas, Tapio Lassi Paavali
(86) International application number: FI9600547
(87) International publication number: WO9714920

(56) References cited:
- WO-A-95/20133
- DE-A- 3 103 955
- DE-C- 3 008 948
- US-A- 4 134 273

## Description

The invention relates to a method for the production of cooling power, in which cooling power is produced by an absorption aggregate that obtains energy from a district heating system and is distributed to buildings by means of liquid circulating in a pipe system. The invention also relates to an arrangement for the production of cooling power.

Today buildings are generally cooled by a cooling aggregate based on a compressor aggregate, the cooling aggregates being dispersed to places of use. Cooling power is produced in them by electricity. The proportion of the cooling of buildings in the consumption of electricity is now fairly important, e.g. in the Southern European countries the electricity consumption peaks in the summer. With regard to production, the consumption also occurs at an unfavourable time. The heat inevitably generated in connection with production of electricity cannot be used for much else than production of hot tap water, and so it has to be condensed and supplied to waterways e.g. by brine condensers or to air by cooling towers.

Cooling power could also be produced by waste heat produced in the production of electricity in so-called absorption aggregates, the best known of which are lithiumbromide/water and ammonia/water aggregates. The consumption of electricity and thus e.g. emissions of CO₂ could be reduced with these aggregates, and the waste heat, which is now completely wasted, could be utilized.

US-A-4 134 273 describes a typical absorption aggregate intended to be used for heating and cooling of a house

The preferred way of generating chill is a so-called district cooling system, in which cooling power is generated concentratedly in power plants and supplied to users via a pipe system in the same way as district heat. This has an advantageous effect e.g. on servicing costs, which in the present, dispersed systems are high, and on reliability, on levelling down of random load peaks, etc.

District cooling systems have not become common, however, due to high investment costs. Although the kWh price of the chill generated in this way is low as compared with the price of electricity, the number of hours of use is so small in those climatic zones where district heating systems are worth building that the investment costs will not be covered. In Finland, for example, such systems have thus not been built. The majority of them exist in Japan, Korea and the U.S.A.

Finnish Patent Application 940,342 (WO-A-9 520 134, EP 0 740 761) teaches a 3-pipe system by which the costs of the distribution system can be reduced significantly. In addition, Finnish Patent Application 940,343 (WO-A-9 520 135, EP 0 772 751) teaches a system in which the operations of the heat exchangers are combined, which makes it possible to significantly reduce the investment costs in individual buildings. Further, Finnish Patent Application 940,344 WO-A-9 520 133, EP 0 740 760 teaches a system in which the return water of the district heating/cooling system is used as condensation water, which is needed by the absorption aggregate, whereby no cooling tower or other condenser is needed in the power plant. This reduces the investment costs and the costs of use in the production of district chill.

The above measures make district cooling systems worth building in new communities where all buildings that require cooling are connected to the system. The proportion of such building, however, is small in industrialized countries, and its proportion in all building is growing smaller. Most building now comprises extension or renovation of existing communities. It is then not possible to connect a significant number of buildings simultaneously to a district cooling system when a system is built in the area. A small number of buildings connected is not sufficient to cover the investment costs of a district cooling system and of generation of district chill, which prevents building of district cooling systems in existing communities.

A similar problem has been encountered when district heating systems have been built. The problem has been solved by movable heating stations in which heat has been produced only for a limited area, whereby the costs of a distribution system have remained small and can have been covered immediately. When a sufficient number of areas has been connected, a main network is built, and the areas are connected to the power plant via the network. The movable heating stations are shifted to new areas or maintained in the area as heating stations that are used during maximum heat demand. The idea cannot be applied to building a district cooling system without difficulty. It is true that the costs of building a main network are eliminated, but the use of return water as condensation water is here not possible. Because of this, cooling towers, ground water, etc. should be used. But, for example, it is often impossible to place cooling towers in urban areas for architectural reasons, lack of space, etc.

Some plants of the above type based on absorption aggregates have been built, and technically such systems work well, but their competitiveness with compressor cooling is questionable, and the smaller the number of hours of use (i.e. in mild and cold climatic zones, where district heating systems are common), the less competitive they are. The reason for this is that the investment costs of an absorption heat pump, a cooling tower and a distribution network are much higher than the costs of a corresponding compressor aggregate. Even when the energy, i.e. heat, is almost free and the electricity used by the compressor aggregate is expensive, a reduction in the costs of use is not sufficient to cover the difference in the investment costs if the number of hours of use is not sufficiently great. The situation is made worse by a strong, short-term load peak in the cooling demand, the peak being more than double the average load during a cooling period. This is due to the fact that in the mild and cold zone, the design outdoor temperature prevails only in the afternoon on a few days a year. The average cooling load is also short-term. Cooling, unlike heating, is not needed round-the-clock but only at midday and in the afternoon. Since the consumption of electricity in the countries situated in the cold and mild zones peaks in the winter, high investment costs cannot be substantiated by a reduction in the investments on electricity production machinery, like in the countries situated in the hot zone. Only a few such plants have thus been built in Middle and Northern Europe for test and research purposes, although they are common in the hot zone.

The above system is described e.g. in simultaneously filed Finnish Patent Application 954,949 (WO-A-9 714 917, EP 0 856 131). The document also discloses a system in which investment costs can be essentially reduced and reliability of the plant can be improved as compared with the prior art. These advantages are achieved by cutting the peak load by evaporative cooling arranged in the air-conditioning units of a building and by levelling daily variation in consumption by providing the system with a tank from which power that has been loaded at night or some other time when there is no consumption or consumption is minimal is unloaded in day-time during a consumption peak.

The evaporative cooling and especially the tank naturally cause additional costs, which, however, are much smaller than the savings achieved by making the absorption heat pump, spray tower, pipe system, etc. smaller. They do, however, impair the competitiveness of the system as compared with compressor cooling.

In the system described in the above-mentioned Finnish patent application, the use of electricity is compensated for in the summer by the use of waste heat, which is otherwise almost totally wasted in the summer, and the system levels the use of waste heat over a 24-hour period. This makes production of energy more economic. Investments on the district heating network and production of heat, however, are determined by the amount of heat consumed in the winter.

The investments on the production and distribution of heat are determined by peak consumption, which is primarily dependent on the outdoor temperature. The design outdoor temperature, however, prevails relatively seldom. The design temperature of Helsinki, for example, is -26°C. This temperature, however, prevails on the average during fewer than 18 hours per year. A temperature of or below 20°C, in turn, prevails on the average during about 88 hours, whereas the entire heating period is about 5000 to 6500 hours in length, depending on the building. The situation is thus very similar to the summer. The temperature duration curve comprises a high peak value of short duration.

With regard to production and distribution of heat, the situation is worsened by variation in the consumption in a 24-hour period. About half of the buildings are not used except during the working hours. In such buildings, ventilation is usually stopped or adjusted to be minimal in the night and the weekends. The proportion of ventilation in the heat consumption of an average building is about half, but in these buildings the heat consumption in a 24-hour period varies continuously between 50% and 100%. This further increases the difference between the average and peak consumption of heat. The indoor temperature of a building like this is also often lowered when the building is not in use, which worsens the situation even further.

In recent years, it has been noticed that the energy saving measures taken have made the situation even worse. The yearly consumption of heat has dropped drastically during the last 20 years. The peak consumption, instead, has not dropped nearly as much. There are several reasons for this. Maybe the most important reason is that heat cannot be recovered from exhaust air at full capacity during the peak load because of the risk of freezing. Another major reason is that the indoor temperature is lowered when the buildings are not in use.

With regard to production and distribution of heat, the situation is difficult. A heat power plant and a distribution system should be designed in accordance with peak consumption, but their average degree of use would then be about 25% to 35%. In addition, the situation is growing worse and worse.

In practice, the power plant and distribution system, which are expensive to build, are not designed in view of the peak load but of a much smaller output. The peak output of heat consumption is generated in heating stations used during maximum heating demand, the heating stations being arranged in different parts of the distribution system and their proportion of the overall heating power optionally being large. In Helsinki, for example, the degree of use of the maximum heating stations is low, at best only a few dozen hours a year. The unit price of heat generated in them is very high because of the high investment costs.

With an arrangement described in simuitaneously filed Finnish Patent Application 954,950 (WO-A-9 714 918, EP 0 856 132), the daily variation in heat consumption can be levelled such that the buildings connected to the system do not take any heat from the district heating network and in some cases may even be able to supply power to the district heating network when consumption in the other buildings is maximal. Correspondingly, they draw power from the network when consumption in the other buildings is small. The basis of the system is that a tank for storing cooling power is used even for the storage of heating power at a temperature that is higher than the temperature of the heat consuming apparatuses of the building. The system makes it possible to level peak loads caused by the other buildings and to make uneconomic maximum heating stations smaller or even replace them.

As stated above, district heat return water obtained from present networks cannot be used in removal of extra heat from an absorption aggregate. A conventional temperature for return water in a design situation is about 40-50°C. The temperature of the water to be condensed, as it returns from the absorber, is about 40-45°C, and it should be cooled to below 30°C, which is naturally impossible to accomplish with district heat return water.

To condense extra heat, one thus needs cooling towers, closed air-cooled condensers, brine condensers or the like, which cause extra costs, consume electricity, bring about servicing costs, etc. A particular problem is the space they need, since extra space is very difficult to find in old buildings in a city centre. The other problems include e.g. architectural problems and health hazards, the latter relating to cooling towers and air-cooled condensers where the temperature is ideal e.g. to the bacterium *legionella*.

Simultaneously filed Finnish Patent Application 954,951 (WO-A-9 714 919, EP 0 856 133) teaches a system in which condensers can either be eliminated altogether or at least their number and/or size can be significantly reduced, whereby the investment costs of the cooling power production machinery can be reduced. The basic idea of the system is that return water of the cooling system of a building is used as condensation water in a cooling aggregate, the return water being stored at an elevated temperature in day-time and cooled at night to its original temperature by means of air-conditioning units.

The problem especially with absorption aggregates is the high temperature of the return water. Modern absorption aggregates can cool water from about 80°C to at most 70°C. Since the flow rate in many parts of a district heating system is minimal in the summer, the return water of the absorption aggregate cannot usually be returned to a supply pipe but it should be returned to a return pipe. When the flow rate even there is low, there is a risk that the temperature in the return pipe may rise to nearly 70°C. This is probably too high to many return pipes in which the compensation for heat expansion has been designed in view of a temperature of 50°C. The estimated maximum temperature is 60°C. The return water of the district heating system should then be cooled by 10-15°C. For this, similar condensers are needed as described above in connection with the absorption aggregate and even the drawbacks caused by them are the same, i.e. costs, consumption of power, servicing, lack of space, health hazards, etc.

The object of the invention is to provide a system by which the drawbacks of the prior art can be eliminated. This is achieved by the invention. The basic idea of the invention is that the temperature of the condensation water returning from the absorption aggregate is about 45°C, so the return water of the district heating system can be cooled with it preferably to 60-55°C. Since the heat supplied to the boiler and to the evaporator of the absorption aggregate are both absorbed into the condensation water, the flow of water is certainly sufficient to cool the return water of the district heating system. The water is heated by 5-9°C, i.e. to 50-55°C, depending on the power factor and temperature design of the absorption aggregate. This kind of rise in temperature does not raise the costs much, no matter how the condensation water is cooled. The method of the invention is characterized in that at least part of the condensation water coming from the absorption part of the absorption aggregate is arranged to cool return water of the district heating system before the condensation water is conducted to a condenser or tank. The arrangement according to the invention, in turn, is characterized in that at least part of the condensation water coming from the absorption part of the absorption aggregate is arranged to be conducted to a heat exchanger arranged in the return pipe of the district heating system before it is conducted to a condenser or tank, whereby the condensation water cools the district heating return water.

The primary advantage of the invention is that either no condensers are needed in the system for the district heating return water, or their size and/or number can be significantly reduced as compared with the previously known solutions. The above drawbacks of the prior art are either eliminated altogether or at least they become essentially easier to solve. It is especially important that the costs of the absorption aggregate are significantly reduced, which makes cooling energy generated by waste heat more competitive as compared with compressor cooling.

In the following the invention will be described in greater detail with reference to embodiments illustrated in the attached drawing, in which
fig. 1 shows a general diagram illustrating a first embodiment of an arrangement according to the invention,
fig. 2 shows a general diagram illustrating a second embodiment of an arrangement according to the invention,
fig. 3 shows a general diagram illustrating a third embodiment of an arrangement according to the invention, and
fig. 4 shows a general diagram illustrating a fourth embodiment of an arrangement according to the invention.

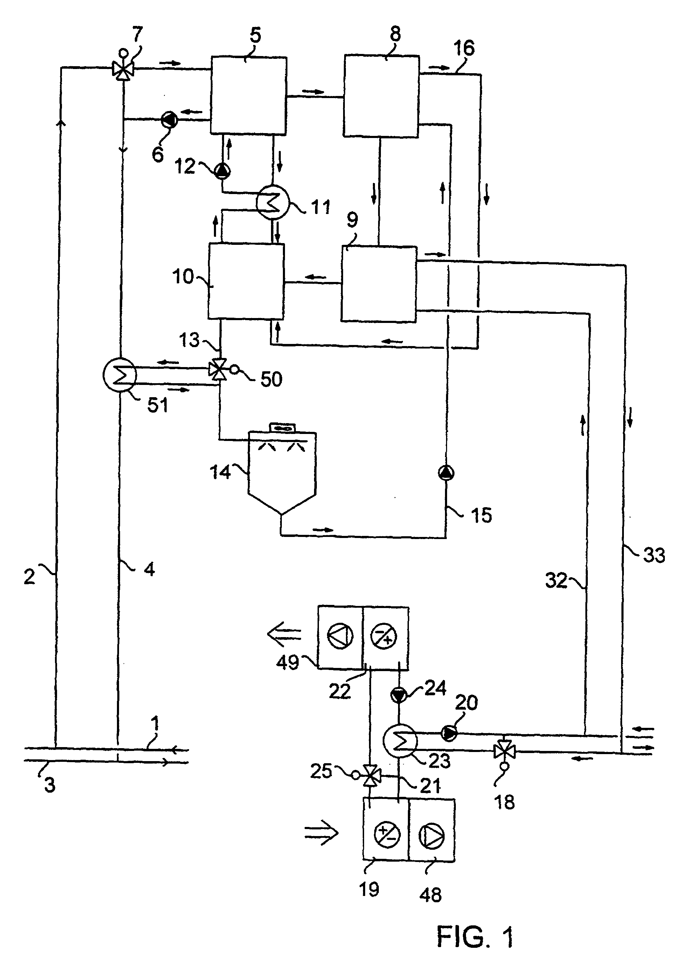

Fig. 1 shows a district heating network 1-4, an absorption aggregate 5-16, a heat transfer circuit 18-25 of an air-conditioning unit, which represents cooling energy demanding apparatuses of a building, and a system of chill distributing pipes 32 and 33.

The operation of the absorption aggregate is described in simultaneously filed WO-A-9 714 917, WO-A-9 714 918 and WO-A-9 714 919, which are here referred to with respect to the operation.

The arrangement of fig. 1 operates, in principle, as described in the following. That part of the return water coming from an absorption part 10 of the absorption aggregate through pipe 13 which is needed for cooling the return water of the district heating system is conducted by a valve 50 to a heat exchanger 51 arranged in a return pipe 4, where it cools return water of the district heating system. From heat exchanger 51, the water is recirculated to pipe 13, further to a condenser 14 and through a pipe 15 to a condenser 8 of the absorption aggregate.

Condenser 14 has to be designed in view of a 5-9°C higher supply water temperature than without a cooling circuit 50-51 of the district heating return water. The costs caused by this, however, are only a fraction of what they would be if an entirely separate cooling circuit with condensers, pipe systems, etc. were built for the district heating return water.

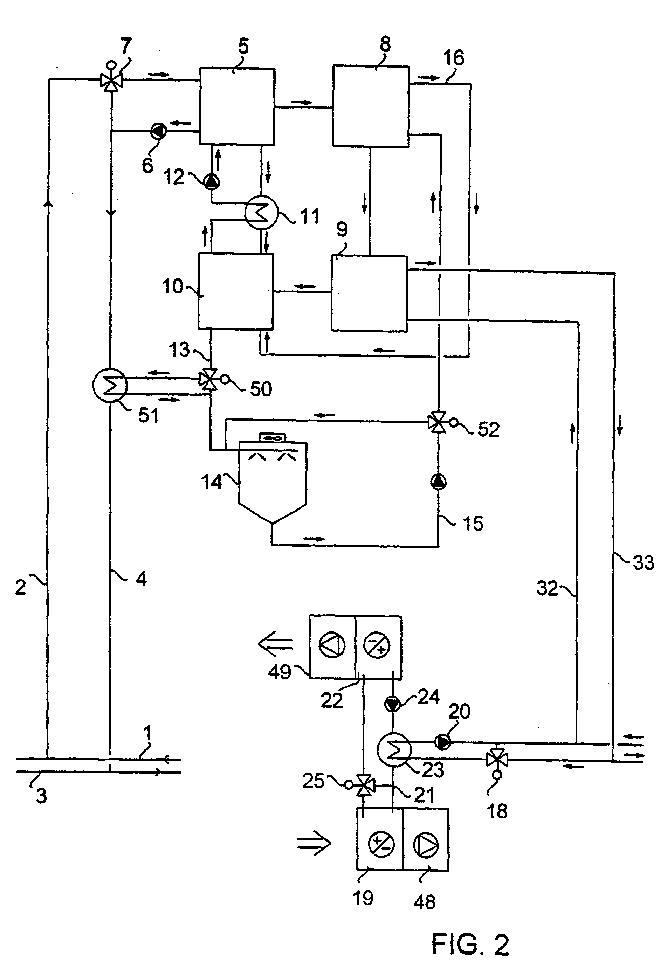

If because of design or some other reason the temperature of the condensation water of the absorption aggregate must be lower than usually, a rise in the temperature of the condensation water caused by the temperature of the district heating return water may lead to difficulties. An embodiment according to fig. 2 can then be used. In the embodiment, part of the water cooled in condenser 14 is recirculated to a return pipe 13 of the condenser by a control valve 52 arranged in a return pipe 15 of condenser 14. Since the water temperature in pipe 15 is usually much below 30°C, the amount of water needed for lowering the temperature is small, and so are the costs caused by the need to make condenser 14 larger.

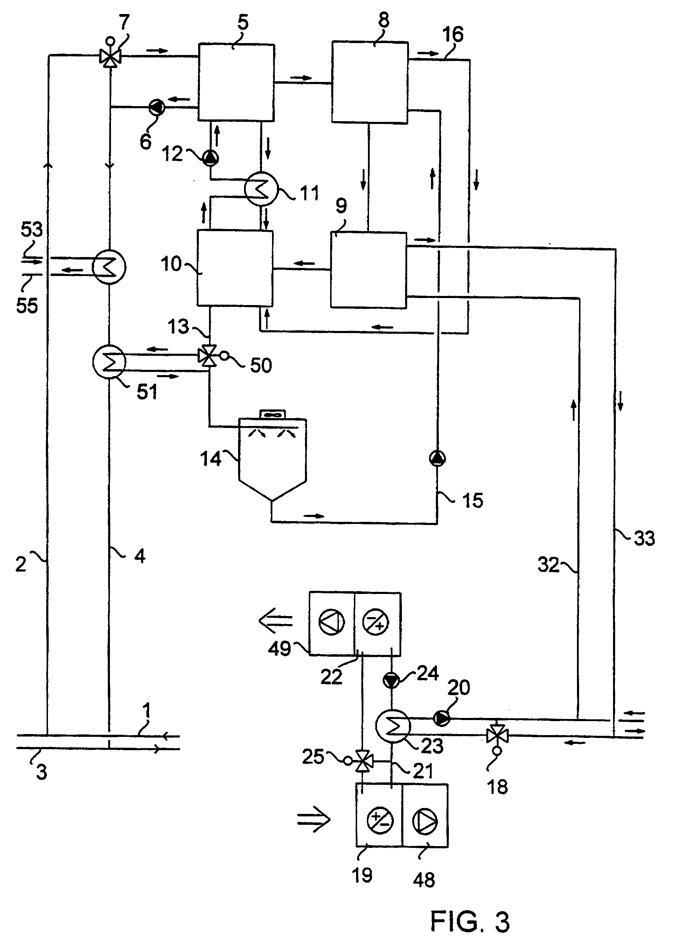

The temperature of the district heating return water coming to heat exchanger 51 can be essentially reduced and the heat contained in it can be utilized by an embodiment according to fig. 3. In the embodiment, a pre-heating means 54 for hot tap water of a building/buildings is arranged in return pipe 4 before heat exchanger 51. In many buildings, the consumption of tap water is so great that heat exchanger 51 is needed for stand-by use only. The embodiment is particularly advantageous since most buildings comprise an exchanger circuit 53-55 for heating, arranged in return pipe 4 of the district heating system. The actual function of the circuit is to lower the temperature of the return water during the heating. Since the consumption of tap water varies greatly in many building types, a heat exchanger 54 should preferably have storage capacity.

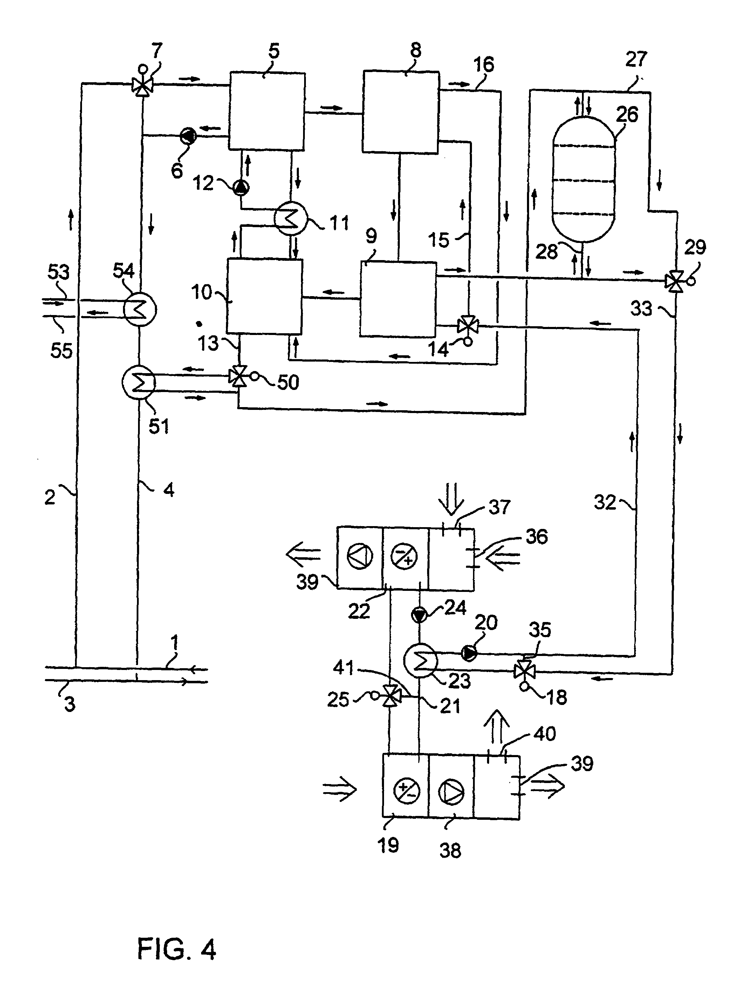

As stated above, the invention can be applied in all systems disclosed in simultaneously filed Finnish Patent Applications 954,949 (WO-A-9 714 917, EP 0 856 131), 954,950 (WO-A-9 714 918, EP 0 856 132) and 954,951 (WO-A-9 714 917, EP 0 856 133), no matter how the condensation water is cooled. An example is an embodiment of fig. 4, in which the hot water generated during the day is conducted through pipe 13 to the tank 26 and cooled at night by means of heat transfer circuits 18-25 and 35-41 of the air-conditioning units to a temperature of about 20°C, whereby the water can be cooled further in the absorption aggregate 6-16 or used as condensation water in the absorption aggregate. The operation is described in detail in Finnish Patent Application 954,951, so it will not be discussed here. We wish to state here only that a control valve is indicated in fig. 4 by reference number 14a.

In some cases, an absorption aggregate will have to be used periodically e.g. in the spring or autumn when the cooling load of a building is light. Preferably, the problem is solved by using the aggregate only at night and storing cold water in a tank 26. In day-time, the absorption aggregate stands idle and cooling is effected by water stored in the tank. Air-conditioning units 18-25 and 35-41 need then not be used, either, since the water stored has a temperature of 20°C.

It is also possible to provide an auxiliary tank for the 20°C return water of the cooling systems of the building produced between operating periods and/or for the 50 to 55°C water produced during an operating period, or for both. They are connected with pipe and control arrangements known per se, and the arrangements can be varied in many ways depending on the selected strategy of use. All the above solutions known per se are encompassed by the invention.

## Claims

1. A method for the production of cooling power, in which cooling power is produced by an absorption aggregate (5, 8, 9, 10) that obtains energy from a district heating system and is distributed to buildings by means of liquid circulating in a pipe system, **characterized in that** at least part of the condensation water coming from the absorption part (10) of the absorption aggregate is arranged to cool (51) return water (4) of the district heating system before the water is conducted to a condenser (14) or tank (26).

2. A method according to claim 1, **characterized in that** after the condenser (14), part of the condensation water is recirculated to the condenser (14).

3. A method according to claim 1 or 2, **characterized in that** the temperature of the district heating return water is reduced (54) before the temperature is reduced (51) by condensation water.

4. A method according to any one of preceding claims 1 to 3, **characterized in that** after the condenser (14), at least part of the condensation water is conducted to a tank (26) connected to the absorption aggregate (5, 8, 9, 10).

5. A method according to any one of the preceding claims, **characterized in that** the power needed by the buildings is drawn in day-time from the tank (26) in which cold water is stored at night.

6. An arrangement for the production of cooling power, in which cooling power is arranged to be produced by an absorption aggregate (5, 8, 9, 10) that obtains energy from a district heating system and is arranged to be distributed to buildings by means of liquid circulating in a pipe system, **characterized in that** at least part of the condensation water coming from the absorption part (10) of the absorption aggregate is arranged to be conducted to a heat exchanger (51) arranged in the return water pipe (4) of the district heating system before it is conducted to a condenser (14) or tank (26), whereby the condensation water cools the district heating return water.

7. An arrangement according to claim 6, **characterized in that** part of the condensation water is arranged to be recirculated to the condenser (14) after the condenser (14) by a valve means (52).

8. An arrangement according to claim 6 or 7, **characterized in that** before the heat exchanger (51), the temperature of the district heating return water is arranged to be reduced by means of another heat exchanger (54) that is designed for producing hot tap water for the building.

9. An arrangement according to any one of preceding claims 6 to 8, **characterized in that** after the condenser (14), at least part of the condensation water is arranged to be conducted to a tank (26) connected to the absorption aggregate (5, 8, 9, 10).

10. An arrangement according to any one of preceding claims 6 to 9, **characterized in that** cold condensation water is arranged to be stored in the tank (26) at night, and that the tank (26) is arranged to supply stored water in day-time to provide buildings with power.

## Patentansprüche

1. Verfahren zum Erzeugen von Kühlleistung, bei dem die Kühlleistung durch ein Absorptionsaggregat (5, 8, 9, 10) erzeugt wird, das Energie von einem Fernheizungssystem bezieht, und mittels einer in einem Rohrleitungssystem zirkulierenden Flüssigkeit an Gebäude verteilt wird, **dadurch gekennzeichnet, dass** mindestens ein Teil des Kondenswassers aus dem Absorptionsteil (10) des Absorptionsaggregats den Wasserrücklauf (4) des Fernheizungssystems abkühlt (51), bevor das Wasser in einen Kondensator (14) oder Behälter (26) geleitet wird.

2. Verfahren nach Anspruch 1, **dadurch gekennzeichnet, dass** nach dem Kondensator (14) ein Teil des Kondenswassers zurück zum Kondensator (14) geleitet wird.

3. Verfahren nach Anspruch 1 oder 2, **dadurch gekennzeichnet, dass** die Temperatur Wasserrücklaufs des Fernheizungssystems verringert (54) wird, bevor die Temperatur durch das Kondenswasser verringert (51) wird.

4. Verfahren nach einem der vorstehenden Ansprüche 1 bis 3, **dadurch gekennzeichnet, dass** nach dem Kondensator (14) mindestens ein Teil des Kondenswassers zu einem Behälter (26) geleitet wird, der mit dem Absorptionsaggregat (5, 8, 9, 10) verbunden ist.

5. Verfahren nach einem der vorstehenden Ansprüche, **dadurch gekennzeichnet, dass** die von den Gebäuden benötigte Leistung während des Tags aus dem Behälter (26) entnommen wird, in dem des Nachts kaltes Wasser gespeichert wird.

6. Anordnung zum Erzeugen von Kühlleistung, bei dem die Kühlleistung durch ein Absorptionsaggregat (5, 8, 9, 10) erzeugt wird, das Energie von einem Fernheizungssystem bezieht, und mittels einer in einem Rohrleitungssystem zirkulierenden Flüssigkeit an Gebäude verteilt wird, **dadurch gekennzeichnet, dass** mindestens ein Teil des Kondenswassers aus dem Absorptionsteil (10) des Absorptionsaggregats zu einem im Wasserrücklaufrohr (4) des Fernheizungssystems angeordneten Wärmetauscher (51) geleitet wird, bevor es zu einem Kondensator (14) oder Behälter (26) geleitet wird, wodurch das Kondenswasser den Wasserrücklauf des Fernheizungssystems abkühlt.

7. Anordnung nach Anspruch 6, **dadurch gekennzeichnet, dass** ein Teil des Kondenswassers nach dem Kondensator (14) durch eine Ventileinrichtung (52) an den Kondensator (14) zurückgeführt wird.

8. Anordnung nach Anspruch 6 oder 7, **dadurch gekennzeichnet, dass** die Temperatur des Wasserrücklaufs des Fernheizungssystems vor dem Wärmetauscher (51) mittels eines anderen Wärmetauschers (54), der zur Erzeugung von warmem Leitungswasser für das Gebilde konzipiert ist, gesenkt wird.

9. Anordnung nach einem der vorstehenden Ansprüche 6 bis 8, **dadurch gekennzeichnet, dass** nach dem Kondensator (14) mindestens ein Teil des Kondenswassers zu einem Behälter (26) geleitet wird, der mit dem Absorptionsaggregat (5, 8, 9, 10) verbunden ist.

10. Anordnung nach einem der vorstehenden Ansprüche 6 bis 9, **dadurch gekennzeichnet, dass** kaltes Kondenswasser des Nachts im Behälter (26) gespeichert wird, und dass der Behälter (26) am Tag gespeichertes Wasser liefert, um die Gebäude mit Leistung zu versorgen.

## Revendications

1. Procédé pour la production d'une puissance de refroidissement, dans lequel l'énergie de refroidissement est produite par un agrégat d'absorption (5, 8, 9, 10) qui tire de l'énergie d'un système de chauffage urbain et est distribuée à des bâtiments au moyen d'une circulation de liquide dans un système de canalisations, **caractérisé en ce qu'**il est fait en sorte qu'au moins une partie de l'eau de condensation provenant de la partie absorption (10) de l'agrégat d'absorption refroidisse (51) l'eau de retour (4) du système de chauffage urbain avant que l'eau soit envoyée à un condenseur (14) ou à un réservoir (26).

2. Procédé selon la revendication 1, **caractérisé en ce que**, après le condenseur (14), une partie de l'eau de condensation est recyclée vers le condenseur (14).

3. Procédé selon la revendication 1 ou 2, **caractérisé en ce que** la température de l'eau de retour du chauffage urbain est réduite (54) avant que la température soit réduite (51) par l'eau de condensation.

4. Procédé selon l'une quelconque des revendications précédentes 1 à 3, **caractérisé en ce que**, après le condenseur (14), au moins une partie de l'eau de condensation est envoyée à un réservoir (26) raccordé à l'agrégat d'absorption (5, 8, 9, 10).

5. Procédé selon l'une quelconque des revendications précédentes, **caractérisé en ce que** l'énergie nécessaire pour les bâtiments est extraite du réservoir (26) pendant la journée, de l'eau froide étant stockée dans ce réservoir pendant la nuit.

6. Dispositif pour la production d'énergie de refroidissement, dans lequel il est fait en sorte que l'énergie de refroidissement soit produite par un agrégat d'absorption (5, 8, 9, 10) qui tire de l'énergie d'un système de chauffage urbain et soit distribuée à des bâtiments par l'intermédiaire d'une circulation de liquide dans un système de canalisations, **caractérisé en ce qu'**il est fait en sorte qu'au moins une partie de l'eau de condensation provenant de la partie absorption (10) de l'agrégat d'absorption soit envoyée à un échangeur de chaleur (51) placé dans la conduite d'eau de retour (4) du système de chauffage urbain avant d'être envoyée à un condenseur (14) ou à un réservoir (26), ce en conséquence de quoi l'eau de condensation refroidit l'eau de retour du chauffage urbain.

7. Dispositif selon la revendication 6, **caractérisé en ce que**, après le condenseur (14), il est fait en sorte qu'une partie de l'eau de condensation soit recyclée vers le condensateur (14), au moyen d'une vanne (52).

8. Dispositif selon la revendication 6 ou 7, **caractérisé en ce que**, avant l'échangeur de chaleur (51), il est fait en sorte que la température de l'eau de retour du chauffage urbain soit réduite au moyen d'un autre échangeur de chaleur (54), qui est destiné à produire de l'eau chaude pour les robinets du bâtiment.

9. Dispositif selon l'une quelconque des revendications précédentes 6 à 8, **caractérisé en ce que**, après le condenseur (14), il est fait en sorte qu'au moins une partie de l'eau de condensation soit envoyée à un réservoir (26) raccordé à l'agrégat d'absorption (5, 8, 9, 10).

10. Dispositif selon l'une quelconque des revendications précédentes 6 à 9, **caractérisé en ce qu'**il est fait en sorte que l'eau de condensation froide soit stockée dans le réservoir (26) pendant la nuit, et que le réservoir (26) fournisse, pendant la journée, l'eau qui a été stockée, pour fournir de l'énergie aux bâtiments.
